# EUROPEAN PATENT APPLICATION

(11) **EP 4 607 416 A1**
(43) Date of publication of application: **27.08.2025**
(21) Application number: 24223419.3
(22) Date of filing: 27.12.2024
(51) Int. Cl.: G06N 20/20, G06V 10/82, G06V 20/58, G06V 10/75, G06V 10/80, G06F 18/25

(54) **METHOD FOR OBTAINING CONFIDENCE OF PERCEPTION OBJECT AND METHOD FOR AUTONOMOUS DRIVING PLANNING AND CONTROL**

(30) Priority: 26.02.2024 CN 202410207413
(71) Applicant: Anhui NIO Autonomous Driving Technology Co., Ltd., Hefei, Anhui 230601 (CN)
(72) Inventor: XU, Guo, AnTing Town, Jiading Shanghai (CN); ZHOU, Yueyin, AnTing Town, Jiading Shanghai (CN); DENG, Haoping, AnTing Town, Jiading Shanghai (CN); SHAN, Jie, AnTing Town, Jiading Shanghai (CN)
(74) Representative: Vossius & Partner Patentanwälte Rechtsanwälte mbB

(57) **Abstract**

The invention relates to the field of autonomous driving technologies, and in particular, provides a method for obtaining a confidence of a perception object, a method for autonomous driving planning and control, a readable storage medium, and a smart device, aiming to solve a problem of how to estimate a more reliable confidence of a perception object based on lower labeling costs, thereby providing an effective response basis for a planning and control module of autonomous driving. According to the invention, backflow data fragments of autonomous driving are applied and labeled with true positive labels and false positive labels to construct a training dataset, a confidence estimation model is trained based on the training dataset to obtain a trained confidence estimation model, and the trained confidence estimation model is applied to estimate a confidence of a perception object in a perception fusion result.

## Description

The present application claims priority of Chinese patent application CN202410207413.0, filed on February 26, 2024, entitled with "Method for obtaining confidence of perception object and method for autonomous driving planning and control", the content of which is incorporated herein by reference in its entirety.

### TECHNICAL FIELD

The invention relates to the field of autonomous driving technologies, and in particular, provides a method for obtaining a confidence of a perception object, a method for autonomous driving planning and control, a readable storage medium, and a smart device.

### BACKGROUND ART

It has always been a goal pursued by the industry for an intelligent driving system to accurately recognize, similar to how a human would, whether an object truly exists and estimate attributes of the object (such as position, speed, size, type, and orientation of the object). There is a certain probability of false positives in a perception model based on deep learning. A false positive or a faulty object attribute provided may often cause a planning and control module to execute false function responses (such as false longitudinal braking and false lateral lane change suppression), resulting in a decrease in user satisfaction. In order to improve the accuracy of the function response of the planning and control module, a perception module needs to provide a comprehensive and reliable object confidence to provide an effective basis for tiered downstream function responses.

In the prior art, a rule-based confidence estimation method generally represents a confidence of an object comprehensively by constructing feature quantities in several dimensions and performing feature quantity weighting. This method is disadvantageous in having feature quantities in a small number of dimensions, and it is difficult to adjust the weight of a feature quantity in each dimension, so that the accuracy of confidence estimation is low and improvement on false positive indicators of an intelligent driving function is limited.

In the prior art, a confidence estimation method based on deep learning generally involves constructing a complex neural network model and acquiring massive amounts of data for training to obtain a model. The drawbacks of this method are that data acquisition and labeling costs are high, the iteration cycle is long, and interpretability of the model is poor, requiring post-processing to mitigate issues.

Accordingly, there is a need in the art for a novel solution for obtaining a confidence of a perception object to solve the above problems.

### SUMMARY

In order to overcome the above shortcomings, the invention is proposed to solve or at least partially solve the problem of how to estimate a more reliable confidence of a perception object based on lower labeling costs, thereby providing an effective response basis for a planning and control module of autonomous driving.

In a first aspect, the invention provides a method for obtaining a confidence of a perception object. The method includes:
estimating, based on a perception fusion result of autonomous driving, a confidence of a perception object in the perception fusion result by applying a preset trained confidence estimation model;
where the confidence estimation model is obtained by training based on a training dataset, the training dataset includes backflow data fragments of autonomous driving, and the backflow data fragments include backflow perception objects in backflow perception fusion results that trigger autonomous driving function responses, and include labeled true positive labels or false positive labels.

In a technical solution of the above method for obtaining a confidence of a perception object, the method further includes obtaining the training dataset according to the following steps:
labeling the backflow data fragments with a true positive label or a false positive label for each of the backflow data fragments, and obtaining a triggering time period for triggering the autonomous driving function response and a triggering object ID for the backflow perception object;
obtaining a feature sequence of the backflow perception object based on the triggering time period and the triggering object ID;
generating training data corresponding to the current backflow data fragment according to the feature sequence and the labeled true positive label or false positive label; and
generating the training dataset based on a plurality of pieces of the training data.

In a technical solution of the above method for obtaining a confidence of a perception object, the obtaining a feature sequence of the backflow perception object includes:
obtaining, according to the triggering object ID, the feature sequence within the triggering time period from a pb file of the backflow perception object.

In a technical solution of the above method for obtaining a confidence of a perception object, the feature sequence includes at least one of a motion consistency feature, a keyframe observation consistency feature, a keyframe correlation quality feature, an observation continuity feature, a fusion optimization feature, and an object attribute feature of the backflow perception object.

In a technical solution of the above method for obtaining a confidence of a perception object, the method further includes evaluating, according to the following steps, the confidence estimation models that have completed the training, to obtain a trained confidence estimation model:
evaluating the confidence estimation models that have completed the training, to obtain evaluation results;
obtaining candidate models based on the evaluation results; and
obtaining the trained confidence estimation model based on the candidate models.

In a technical solution of the above method for obtaining a confidence of a perception object, the evaluation result includes a true positive recall rate and a false positive recall rate of the confidence estimation model; and
the obtaining candidate models based on the evaluation results includes:
selecting a confidence estimation model with the true positive recall rate greater than a first preset value and the false positive recall rate greater than a second preset value as the candidate model.

In a technical solution of the above method for obtaining a confidence of a perception object, the selecting a confidence estimation model with the true positive recall rate greater than a first preset value and the false positive recall rate greater than a second preset value as the candidate model includes:
when there are a plurality of confidence estimation models with the false positive recall rate greater than the second preset value, selecting the confidence estimation model with the highest false positive recall rate as the candidate model.

In a technical solution of the above method for obtaining a confidence of a perception object, the obtaining the trained confidence estimation model based on the candidate models includes:
performing simulation validation on the candidate models based on a preset rule, and selecting the candidate model that passes the validation as the trained confidence estimation model.

In a technical solution of the above method for obtaining a confidence of a perception object, the confidence estimation model is a random forest model; and
the estimating, based on a perception fusion result of autonomous driving, a confidence of a perception object in the perception fusion result by applying a preset trained confidence estimation model includes:
obtaining a feature sequence of the perception object based on the perception fusion result; and
estimating the confidence of the perception object according to the feature sequence by applying the trained random forest model.

In a technical solution of the above method for obtaining a confidence of a perception object, the estimating the confidence of the perception object according to the feature sequence by applying the trained random forest model includes:
obtaining, based on the random forest model, a confidence result of each tree in the random forest model according to the feature sequence; and
estimating the confidence of the perception object according to the confidence results of all trees in the random forest model.

In a second aspect, the invention provides a method for autonomous driving planning and control. The method includes:
estimating a confidence of a perception object for autonomous driving based on the method for obtaining a confidence of a perception object according to any one of the technical solutions of the above method for obtaining a confidence of a perception object; and
performing autonomous driving planning and control based on the perception object and the confidence.

In a technical solution of the above method for autonomous driving planning and control, the performing autonomous driving planning and control based on the perception object and the confidence includes:
when the confidence is greater than or equal to a preset first confidence threshold, directly making an autonomous driving function response to the perception object;
when the confidence is less than the first confidence threshold and greater than or equal to a preset second confidence threshold, making the autonomous driving function response to the perception object after delaying for a first preset time; and
when the confidence is less than the second confidence threshold, making no autonomous driving function response to the perception object.

In a third aspect, a computer-readable storage medium is provided. The computer-readable storage medium stores a plurality of program codes, where the program codes are adapted to be loaded and executed by at least one processor to implement the method for obtaining a confidence of a perception object according to any one of the technical solutions of the above method for obtaining a confidence of a perception object or the method for autonomous driving planning and control according to any one of the technical solutions of the above method for autonomous driving planning and control.

In a fourth aspect, a smart device is provided. The smart device includes:
at least one processor;
and a memory in communication connection with the at least one processor,
where the memory stores a computer program, and the computer program, when executed by the at least one processor, implements the method for obtaining a confidence of a perception object according to any one of the technical solutions of the above method for obtaining a confidence of a perception object or the method for autonomous driving planning and control according to any one of the technical solutions of the above method for autonomous driving planning and control.

The one or more technical solutions of the invention described above have at least one or more of the following beneficial effects.

In the technical solutions implementing the invention, according to the invention, backflow data fragments of autonomous driving are applied and labeled with true positive labels and false positive labels to construct a training dataset, a confidence estimation model is trained based on the training dataset to obtain a trained confidence estimation model, and the trained confidence estimation model is applied to estimate a confidence of a perception object in a perception fusion result. Through the above configurations, the invention can achieve accurate estimation of the confidence of the perception object, thereby providing an effective response basis for a planning and control process of autonomous driving, avoiding occurrence of false positives, and effectively improving the user experience. Meanwhile, since the training dataset of the invention is constructed from the backflow data fragments of autonomous driving and only requires labeling of the true positive labels and the false positive labels, an efficient data closed-loop can be achieved with lower labeling costs.

### BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of a method for obtaining a confidence of a perception object according to an embodiment of the invention;
FIG. 2 is a schematic flowchart of main steps of constructing a training dataset according to an implementation of an embodiment of the invention;
FIG. 3 is a schematic flowchart of main steps of model deployment of a confidence estimation model according to an implementation of an embodiment of the invention;
FIG. 4 is a schematic flowchart of main steps of a method for autonomous driving planning and control according to an embodiment of the invention;
FIG. 5 is a schematic diagram of a main implementation architecture of a method for autonomous driving planning and control according to an implementation of an embodiment of the invention;
FIG. 6 is a schematic diagram of a scenario where false braking is suppressed in an example according to an embodiment of the invention;
FIG. 7 is a schematic diagram of a scenario where false braking is eliminated in another example according to an embodiment of the invention;
FIG. 8 is a schematic diagram of a scenario where false braking is eliminated in a third example according to an embodiment of the invention;
FIG. 9 is a schematic diagram of a data closed-loop iteration result of a false braking suppressing process in a fourth example according to an embodiment of the invention; and
FIG. 10 is a schematic diagram of a connection between a memory and a processor of a smart device according to an embodiment of the invention.

### DETAILED DESCRIPTION OF EMBODIMENTS

Some implementations of the invention are described below with reference to the accompanying drawings. Those skilled in the art should understand that these implementations are only used to explain the technical principles of the invention, and are not intended to limit the scope of protection of the invention.

In the description of the invention, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "alan" and "this" in the singular form may also include the plural form.

Some terms in the invention are explained here first.

An autonomous driving system (ADS) means that the system continuously performs all dynamic driving tasks (DDTs) within its own operational domain design (ODD). That is, a machine system is allowed to fully undertake the tasks of automatic vehicle maneuvering only under specified conditions of appropriate driving scenarios. Specifically, the system is activated when the vehicle meets the ODD conditions, such that the system takes over from a human driver as the driving subject of the vehicle. The dynamic driving task (DDT) refers to continuous lateral (left and right steering) and longitudinal motion control (acceleration, deceleration, and constant speed) of the vehicle, as well as detection of and response to a target and an event in a driving environment of the vehicle. The operational domain design (ODD) refers to conditions under which the autonomous driving system can operate safely, and the conditions set therefor can include a geographical location, a road type, a speed range, weather, time, national and local traffic laws and regulations, etc.

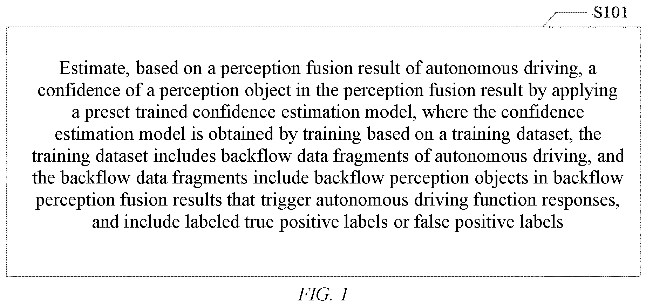

Referring to FIG. 1, FIG. 1 is a schematic flowchart of main steps of a method for obtaining a confidence of a perception object according to an embodiment of the invention. As shown in FIG. 1, the method for obtaining a confidence of a perception object in the embodiment of the invention mainly includes the following step S101.

Step S101: Estimate, based on a perception fusion result of autonomous driving, a confidence of a perception object in the perception fusion result by applying a preset trained confidence estimation model. The confidence estimation model is obtained by training based on a training dataset, the training dataset includes backflow data fragments of autonomous driving, and the backflow data fragments include backflow perception objects in backflow perception fusion results that trigger autonomous driving function responses, and include labeled true positive labels or false positive labels.

In this embodiment, the training dataset may be constructed based on the backflow data fragments of autonomous driving. A backflow data fragment includes a backflow perception object that triggers an autonomous driving function response, and the backflow data fragment is labeled with a true positive (TP) label or false positive (FP) label for the autonomous driving function response. The confidence estimation model is trained based on the training dataset, and the trained confidence estimation model is applied to estimate the confidence of the perception object in the perception fusion result of autonomous driving.

In one implementation, the confidence estimation model is a neural network model based on deep learning.

In one implementation, the confidence estimation model is a random forest model. Applying the random forest model to estimate the confidence of the perception object enables model lightweighting, allowing an inference process to operate independently of GPU resources and consume less time.

In one implementation, the backflow data fragments may be obtained through a shadow mode of vehicles. For example, within 2 to 3 days, backflow data fragments in a shadow mode, amounting to 1 to 2 million kilometers of data, may be obtained from tens of thousands of mass-produced vehicles. The shadow mode refers to a mode of a vehicle returning data and performing performance testing of the vehicle during operation on real roads. The backflow data fragment refers to data returned by the vehicle during operation on real roads.

In one implementation, whether a backflow data fragment is a correct autonomous driving response may be manually determined, and the backflow data fragment may be labeled with a true positive label or a false positive label based on a determination result.

In one implementation, backflow data fragments from real vehicles may be directly applied to construct the training dataset, without the need for secondary handling and processing of the backflow data fragments, which can effectively avoid problems of end-cloud inconsistency and low problem reproducibility.

In one implementation, the autonomous driving function response may include, but is not limited to, braking, lane change, deceleration, turning, etc.

Based on the above step S101, in the embodiment of the invention, the backflow data fragments of autonomous driving are applied and labeled with true positive labels and false positive labels to construct the training dataset, the confidence estimation model is trained based on the training dataset to obtain the trained confidence estimation model, and the trained confidence estimation model is applied to estimate the confidence of the perception object in the perception fusion result. Through the above configurations, the embodiment of the invention can achieve accurate estimation of the confidence of the perception object, thereby providing an effective response basis for a planning and control process of autonomous driving, avoiding occurrence of false positives, and effectively improving the user experience. Meanwhile, since the training dataset of the invention is constructed from the backflow data fragments of autonomous driving and only requires labeling of the true positive labels and the false positive labels, an efficient data closed-loop can be achieved with lower labeling costs.

In one implementation of an embodiment of the invention, the training dataset map may be obtained according to the following steps S201 to S204.

Step S201: Label the backflow data fragments with a true positive label or a false positive label for each of the backflow data fragments, and obtain a triggering time period for triggering the autonomous driving function response and a triggering object ID for the backflow perception object.

In this implementation, the backflow data fragments may be labeled with a true positive label or a false positive label for each of the backflow data fragments, a triggering starting time and a triggering ending time for the autonomous driving function response may be obtained to derive the triggering time period, and the triggering object ID for the backflow perception object may be obtained.

In one implementation, a vehicle side may store and return backflow data fragments of the vehicle side in the form of pb files. The pb file is a serialized data format proposed by Google.

Step S202: Obtain a feature sequence of the backflow perception object based on the triggering time period and the triggering object ID.

In this implementation, the feature sequence within the triggering time period may be obtained, according to the triggering object ID, from the pb file of the backflow perception object. That is, an original feature quantity sequence may be obtained by parsing the pb file and serve as the feature sequence.

In an implementation, the feature sequence may include, but is not limited to, a motion consistency feature, a keyframe observation consistency feature, a keyframe correlation quality feature, an observation continuity feature, a fusion optimization feature, an object attribute feature, etc., of the backflow perception object.

In this implementation, in order to better distinguish whether the autonomous driving function response is a true positive or a false positive, features of a plurality of dimensions may be constructed to form a feature sequence. For example, features of 30 to 50 dimensions may be constructed to form a feature sequence.

In one implementation, the backflow data fragments may be parsed using an autonomous script to obtain the feature sequence of the backflow perception object from the triggering starting time to the triggering ending time, and after adding the true positive label or false positive label to the feature sequence, a tabular dataset is generated as the training dataset.

In one example, referring to Table 1, Table 1 is a classification table of features included in a feature sequence. Table 1 shows classifications of different features included in the feature sequence, as well as feature quantities and usage of each feature classification, where x_position represents the position in an x-axis direction, and y_position represents the position in a y-axis direction. All feature quantities are directly extracted from the backflow data fragments without offline computing and secondary processing, which can avoid the impact of end-cloud inconsistency on the backflow data fragments.

Table 1 Classification Table of Features Included in Feature Sequence

| Classification | Feature quantity | Usage |
|---|---|---|
| Motion consistency feature | Lateral motion consistency | To assess whether motion states of successive frames are self-consistent |
| | Longitudinal motion consistency | |
| Keyframe observation consistency | x_position, 0^{th}-order polynomial fitting | To assess whether original observation positions involved in optimization are self-consistent |
| | x_position, 1^{st}-order polynomial fitting | |
| | x_position, 2^{nd}-order polynomial fitting | |
| | y_position, 0^{th}-order polynomial fitting | |
| | y_position, 1^{st}-order polynomial fitting | |
| | y position, 2^{nd}-order polynomial fitting | |
| Keyframe correlation quality | Average of correlation scores | To assess original observation positions involved in optimization |
| | Standard deviation of correlation scores | |
| Observation correlation quality feature | Average of overall correlation scores | To assess whether correlations of original observations of various sensors are reliable |
| | Standard deviation of overall correlation scores | |
| | Average of lidar correlation scores | |
| | Standard deviation of lidar correlation scores | |
| | Average of bev front correlation scores | |
| | Standard deviation of bev front correlation scores | |
| | Average of bev rear correlation scores | |
| | Standard deviation of bev rear correlation scores | |
| Observation continuity feature | Lidar observation continuity | To assess whether observations in a lifecycle of an object are consecutive |
| | Bev front observation continuity | |
| | Bev rear observation continuity | |
| | Overall observation continuity | |
| Fusion optimization feature | Initial optimization error | To assess whether indicators in an optimization process are abnormal |
| | Final optimization error | |
| | Number of optimizations | |
| | Reason for exiting optimization | |
| Object attribute feature | Type of object | To assess whether various types of attributes after smoothing filtering of the object are abnormal or measure the correlation |
| | Occlusion ratio of object | |
| | Tracking time of object | |
| | Loss time of object | |
| | Group label of object | |
| | Human existence label of object | |
| | Position of object | |
| | Speed of object | |
| | Course of object | |

Step S203: Generate training data corresponding to the current backflow data fragment according to the feature sequence and the labeled true positive label or false positive label.

In this implementation, the training data corresponding to the current backflow data fragment may be generated according to the feature sequence and the labeled true positive label or false positive label.

Step S204: Generate the training dataset based on a plurality of pieces of the training data.

In this implementation, the training dataset may be generated based on the plurality of pieces of training data.

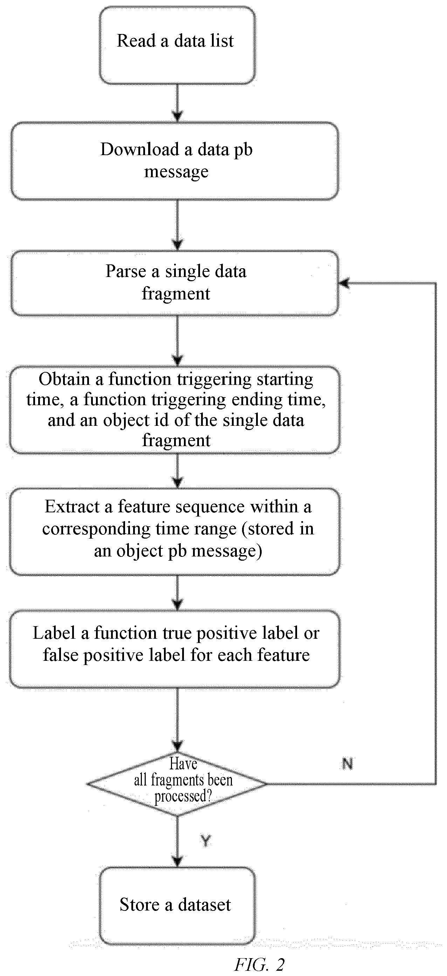

In one implementation, referring to FIG. 2, FIG. 2 is a schematic flowchart of main steps of constructing a training dataset according to one implementation of an embodiment of the invention. As shown in FIG. 2, a data list (backflow data fragments) may be read first, a data pb message (pb file) is downloaded, a single data fragment is parsed, a function triggering starting time, an ending time, and a triggering object ID of the single data fragment are obtained, a feature sequence within a corresponding time range is extracted (where the feature sequence is stored in an object pb message), a function true positive label or false positive label is added to each feature sequence, and it is determined whether all the backflow data fragments have been processed, and if so, the training dataset is stored, if not, the process continues to parse a single dataset.

In one implementation of an embodiment of the invention, the confidence estimation models that have completed the training may be evaluated according to the following steps S301 to S303 to obtain a trained confidence estimation model:
Step S301: Evaluate the confidence estimation models that have completed the training, to obtain evaluation results.

In this implementation, the confidence estimation models that have completed the training may be evaluated to obtain evaluation results.

Step S302: Obtain candidate models based on the evaluation results.

In this implementation, the evaluation result includes a true positive recall rate (TP recall) and a false positive recall rate (FP recall) of the confidence estimation model, and a confidence estimation model with the true positive recall rate greater than a first preset value and the false positive recall rate greater than a second preset value may be selected as the candidate model. The higher the false positive recall rate, the better.

In one implementation, the first preset value may be 0.9, and the second preset value may be 0.7.

In one implementation, when there are a plurality of confidence estimation models with the false positive recall rate greater than the second preset value, the confidence estimation model with the highest false positive recall rate is selected as the candidate model.

Step S303: Obtain the trained confidence estimation model based on the candidate models.

In this implementation, simulation validation may be performed on the candidate models based on a preset rule, and a candidate model that passes the validation may be selected as the trained confidence estimation model.

In one implementation, the preset rule may be an Autonomous Emergency Braking (AEB) regulatory scenario dataset. When responses can be correctly triggered for all scenarios in the AEB regulatory scenario dataset, it may be considered that the candidate model has passed the validation.

In one implementation of an embodiment of the invention, the confidence estimation model is a random forest model, and the step S 101 may further include the following steps S1011 and S 1012:
Step S1011: Obtain a feature sequence of the perception object based on the perception fusion result.

In this implementation, the feature sequence of the perception object may be obtained based on the perception fusion result of autonomous driving.

In one implementation, the feature sequence of the perception object may be obtained by parsing the perception fusion result.

Step S1012: Estimate the confidence of the perception object according to the feature sequence by applying the trained random forest model.

In this implementation, the step S 1012 may further include the following steps S 10121 and S 10122.

Step S 10121: Obtain, based on the random forest model, a confidence result of each tree in the random forest model according to the feature sequence.

Step S10122: Estimate the confidence of the perception object according to the confidence results of all trees in the random forest model.

In this implementation, during a model deployment application phase, the confidence result of each tree in the random forest model may be obtained based on the feature sequence, and the confidence of the perception object may be estimated in combination with the confidence results of all trees in the random forest model.

In one implementation, the confidence results of all trees may be averaged as the confidence of the perception object.

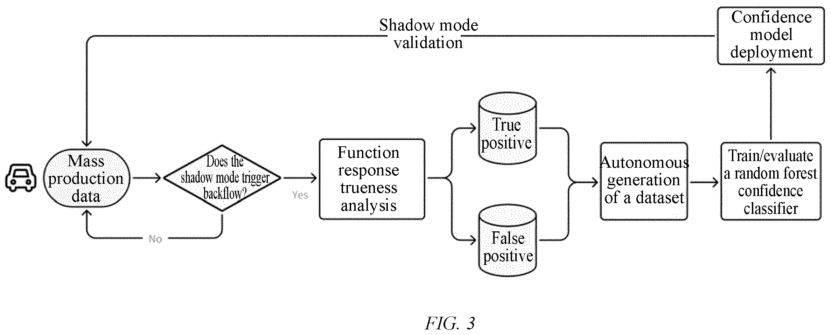

In one implementation, referring to FIG. 3, FIG. 3 is a schematic flowchart of main steps of model deployment of a confidence estimation model according to one implementation of an embodiment of the invention. As shown in FIG. 3, it may be determined, based on mass production data, whether there is a shadow mode that triggers data backflow. If so, a function response trueness analysis is performed on backflow data fragments, and a true positive label or a false positive label is added to each backflow data fragment to achieve autonomous generation of a training dataset. A random forest model confidence classifier (confidence estimation model) is trained/evaluated based on the training dataset. After the training/evaluation is completed, the confidence estimation model is deployed, and the confidence estimation model is validated based on the mass production data obtained from the shadow mode.

Further, the invention also provides a method for autonomous driving planning and control.

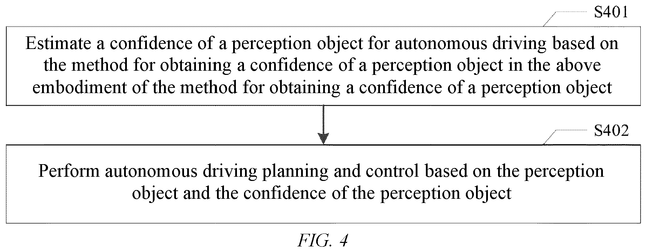

Referring to FIG. 4, FIG. 4 is a schematic flowchart of main steps of a method for autonomous driving planning and control according to an embodiment of the invention. As shown in FIG. 4, the method for autonomous driving planning and control according to the embodiment of the invention mainly includes the following steps S401 and S402.

Step S401: Estimate a confidence of a perception object for autonomous driving based on the method for obtaining a confidence of a perception object in the above embodiment of the method for obtaining a confidence of a perception object.

Step S402: Perform autonomous driving planning and control based on the perception object and the confidence of the perception object.

In this embodiment, the step S402 may further include the following steps S4021 to S4023.

Step S4021: When the confidence is greater than or equal to a preset first confidence threshold, directly make an autonomous driving function response to the perception object.

Step S4022: When the confidence is less than the first confidence threshold and greater than or equal to a preset second confidence threshold, make the autonomous driving function response to the perception object after delaying for a first preset time.

Step S4023: When the confidence is less than the second confidence threshold, make no autonomous driving function response to the perception object.

In this implementation, tiered responses of autonomous driving planning and control may be performed based on the magnitude of the confidence of the perception object. Specifically, when the confidence is greater than the first confidence threshold, the autonomous driving function response may be directly made. When the confidence is less than the first confidence threshold and greater than or equal to the second confidence threshold, the autonomous driving function response to the perception object may be made after delaying for the first preset time. When the confidence is less than the second confidence threshold, no autonomous driving function response to the perception object may be made.

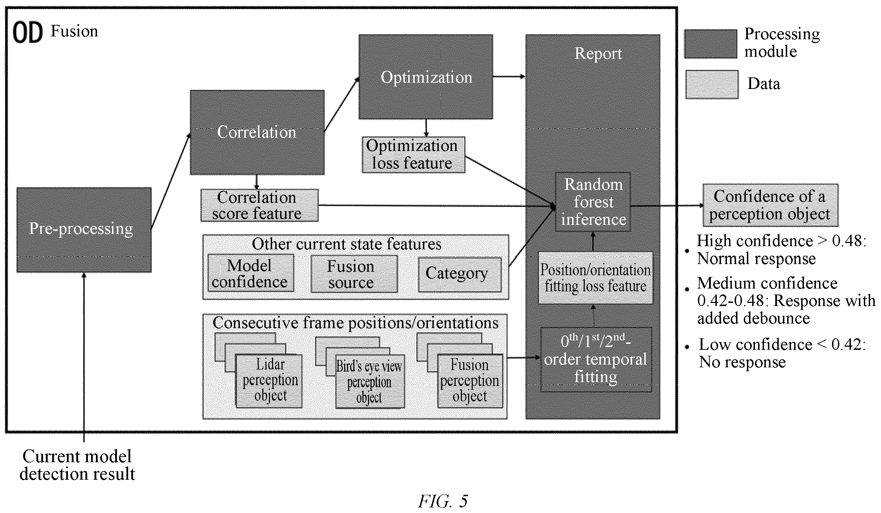

In one implementation, referring to FIG. 5, FIG. 5 is a schematic diagram of main implementation architecture of a method for autonomous driving planning and control according to one implementation of an embodiment of the invention. As shown in FIG. 5, perception objects obtained from a plurality of sources may be used as current detection results of a model and input into an OD (perception object) fusion model for preprocessing, correlation, optimization, and other operations. The confidence (fusion confidence) of the perception object is estimated by inference using the random forest model based on a correlation cost (score) feature, an optimization Loss feature, other current state features, and a position/orientation fitting loss feature. For a high confidence, that is, greater than 0.48, a response is made normally. For a medium confidence, that is, between 0.42 and 0.48, a response is made with an added debounce (delay). For a low confidence, that is, less than 0.42, no response is made. The position/orientation fitting loss feature is obtained by performing 0^{th}/1^{st}/2^{nd}-order temporal fitting on consecutive frame positions and orientations of a lidar perception object, a bird's eye view perception object, and a fusion perception object. The other current state features are obtained based on factors such as a model confidence, a fusion source, and a category.

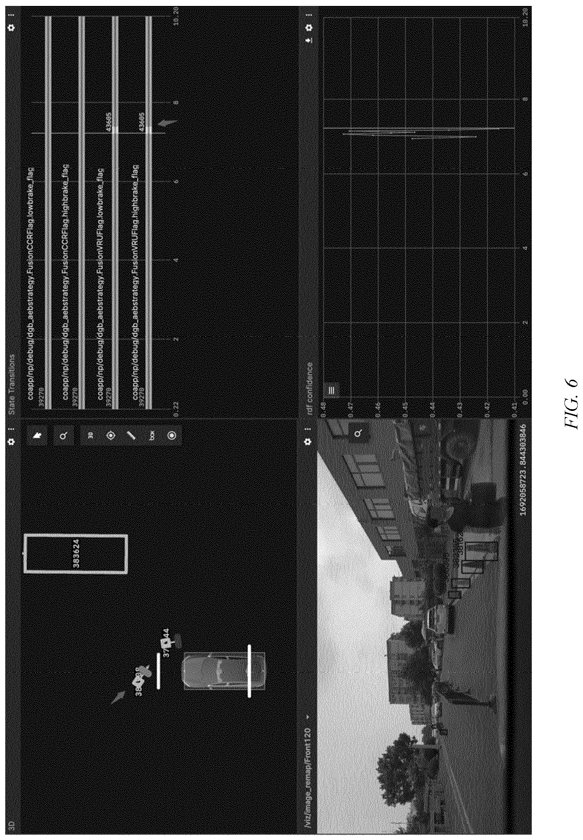

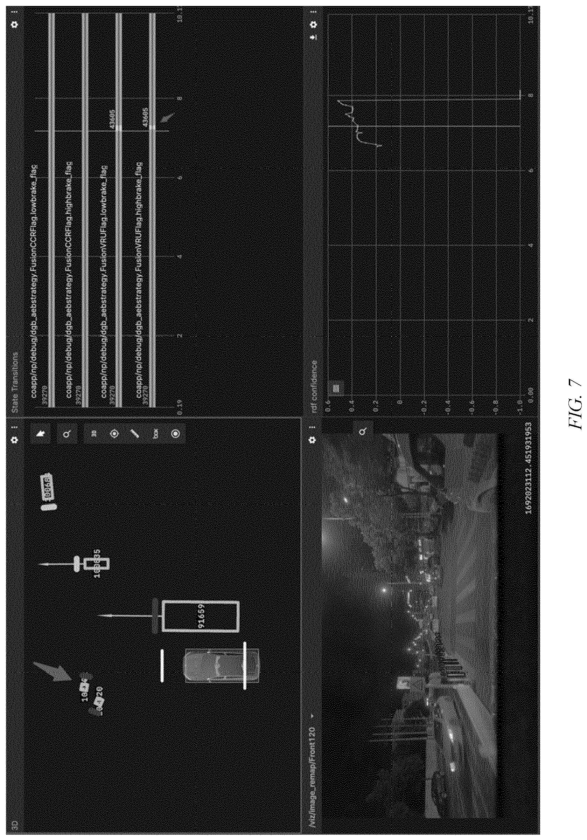

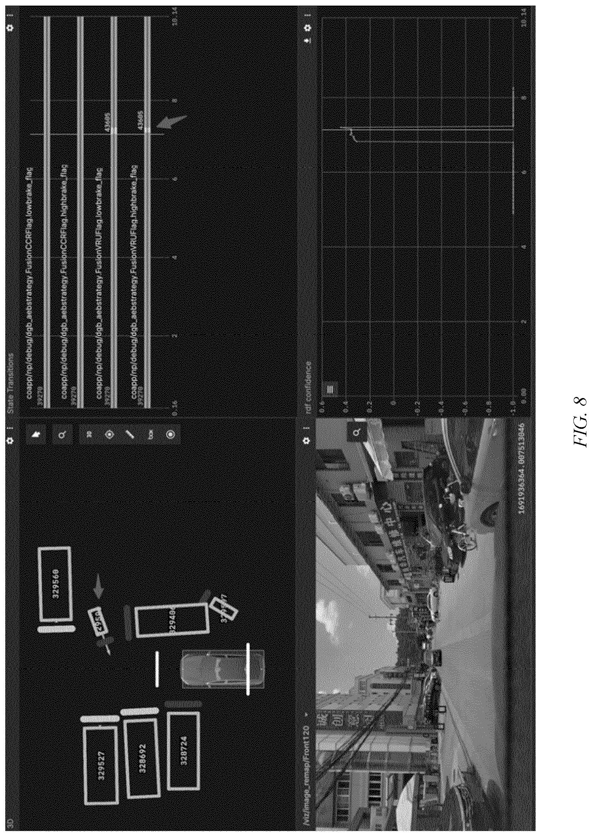

Referring to FIG. 6 to FIG. 8, the method for autonomous driving planning and control according to an embodiment of the invention is illustrated below by taking the first confidence threshold being 0.48, the second confidence threshold being 0.42, and the autonomous driving function response being emergency braking as an example. FIG. 6 is a schematic diagram of a scenario where false braking is suppressed in one example according to an embodiment of the invention. FIG. 7 is a schematic diagram of a scenario where false braking is eliminated in another example according to an embodiment of the invention. FIG. 8 is a schematic diagram of a scenario where false braking is eliminated in a third example according to an embodiment of the invention. The code 43605 in FIG. 6 to FIG. 8 is an emergency braking function response number, a rectangular box is a perception object, and the number corresponding to a rectangular box is a perception object ID.

In the existing technologies, an autonomous driving planning and control module generally computes a collision probability with reference to its own position and motion quantity and a position and motion quantity of another vehicle/person, and decides whether to brake accordingly. In some complex or specific scenarios, the absence of a perception object or abnormal states such as speed and position may lead to false braking, which affects the experience of using autonomous driving for users, and more seriously, may even cause physical injury to the users. The method for autonomous driving planning and control in the invention achieves the tiered responses based on the confidence of the perception object. The confidence of the perception object is a comprehensive assessment indicator of true existence of the object or accuracy of an object attribute, with a value range between 0 and 1. In tiered determination of emergency braking, for a perception object with a high confidence (a confidence greater than or equal to 0.48), emergency braking may be directly performed; for a perception object with a medium confidence (a confidence greater than or equal to 0.42 and less than 0.48), emergency braking may be performed after delaying for a period of time; and for a perception object with a low confidence (a confidence less than 0.42), no emergency braking may be performed.

As shown in FIG. 6, when an ego vehicle turns left, a false recognition of a non-existing pedestrian crossing the road at the left side is made, and a confidence thereof is less than 0.48 and greater than 0.42 and is determined as a medium confidence. A response is made after delaying for a period of time, and false braking is suppressed.

As shown in FIG. 7, there is a stationary group of pedestrians on the roadside ahead. A false detection of a pedestrian crossing speed is made, and a confidence of the pedestrian crossing speed is less than 0.42 and is determined as a low confidence. Therefore, no response is made, and false braking is eliminated.

As shown in FIG. 8, the ego vehicle is driving straight forward on a straight road, and there is a stationary bicycle on the right side. An abnormality in a lateral perception speed occurs, and a confidence of the lateral perception speed is less than 0.42 and is determined as a low confidence. Therefore, no response is made, and false braking is eliminated.

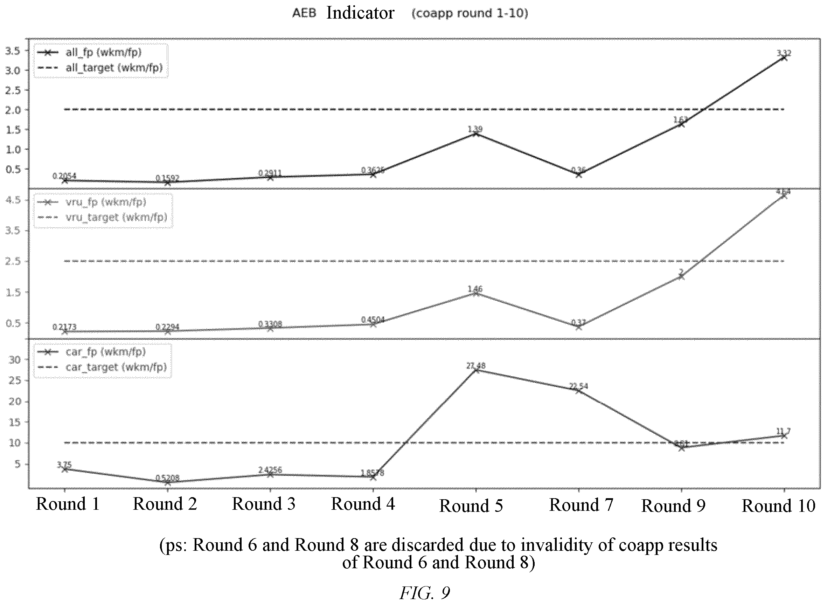

In another example, referring to FIG. 9, FIG. 9 is a schematic diagram of a data closed-loop iteration result of a false braking suppressing process in a fourth example according to an embodiment of the invention. As shown in FIG. 9, in this example, 10 rounds of data closed-loop iteration are performed, where Round 5 and Round 10 use the method for autonomous driving planning and control of the invention, and the other rounds use a rule-based method to implement planning and control. As can be seen from FIG. 9, the method for autonomous driving planning and control of the invention has a desirable effect in suppressing AEB false braking (FP):
Round 5: The overall indicator has increased from 0.3625 wkm/fp to 1.39 wkm/fp, presenting an improvement of 383% with one single iteration.

Round 8: The overall indicator has increased from 1.63 wkm/fp to 3.32 wkm/fp, presenting an improvement of 203% with one single iteration.

In FIG. 9, Round 6 and Round 8 are discarded due to invalidity of coapp results of Round 6 and Round 8.

It should be noted that the meaning of "confidence obtaining" involved in the invention is equivalent to "confidence estimation" that is well-known to those skilled in the art.

It should be noted that although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

Those skilled in the art may understand that all or some of the procedures in the methods in the above embodiments of the invention may be implemented by using a computer program instructing related hardware. The computer program may be stored in a computer-readable storage medium. When the computer program is executed by at least one processor, the steps in the above method embodiment may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention also provides a computer-readable storage medium. In the computer-readable storage medium embodiment according to the invention, the computer-readable storage medium may be configured to store a program for performing the method for obtaining a confidence of a perception object in the above method embodiment, and the program may be loaded and executed by at least one processor to implement the above method for obtaining a confidence of a perception object. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

The invention also provides a computer-readable storage medium. In an embodiment of the computer-readable storage medium according to the invention, the computer-readable storage medium may be configured to store a program for performing the method for autonomous driving planning and control in the above method embodiments, and the program may be loaded and executed by at least one processor to implement the above method for autonomous driving planning and control. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

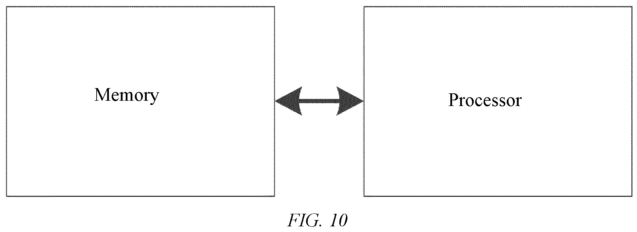

Further, the invention also provides a smart device. In an embodiment of the smart device according to the invention, the smart device may include at least one processor; and a memory in communication connection with the at least one processor, where the memory stores a computer program that, when executed by the at least one processor, causes the at least one processor to implement the method described in any of the above embodiments. The smart device described herein may include a driving device, a smart car, a robot, etc. Referring to FIG. 10, FIG. 10 is a schematic diagram of a connection between a memory and a processor in a smart device according to an embodiment of the invention. FIG. 10 shows by way of example that the memory is in communication connection with the processor by means of a bus.

In some embodiments of the invention, the smart device further includes at least one sensor for sensing information. The sensor is in communication connection with any type of processor mentioned in the invention. Optionally, the smart device further includes an autonomous driving system for guiding the smart device to drive autonomously or assisting in driving. The processor is in communication with the sensor and/or the autonomous driving system, for performing the method described in any of the above embodiments.

Further, it should be understood that, since the configuration of modules is merely intended to illustrate function units of the apparatus in the invention, physical devices corresponding to these modules may be a processor itself, or part of software, part of hardware, or part of a combination of software and hardware in the processor. Therefore, the quantity of modules in the figure is merely illustrative.

Those skilled in the art can understand that the modules in the apparatus may be adaptively split or combined. Such a split or combination of specific modules does not cause the technical solutions to depart from the principles of the invention. Therefore, technical solutions after any such split or combination shall all fall within the scope of protection of the invention.

The related user personal information that may be involved in the embodiments of the invention is all personal information that is provided actively by a user in a process of using a product/service or is generated by using a product/service and that is obtained through authorization by the user based on an appropriate purpose of a service scenario strictly in accordance with requirements of laws and regulations and in accordance with the principles of legality, legitimacy, and necessity.

The user personal information processed in the invention varies depending on the specific product/service scenario, and shall be subject to the specific scenario in which the user uses the product/service. It may involve account information, device information, driving information, vehicle information, or other related information of the user. The applicant treats and handles the user personal information with a high degree of diligence.

The invention attaches great importance to the security of the user personal information, and reasonable and feasible security protection measures that comply with industry standards have been taken to protect information of the user and prevent the personal information from unauthorized access, public invention, use, modification, damage or loss.

Heretofore, the technical solutions of the invention have been described in combination with the preferred implementations shown in accompanying drawings. However, those skilled in the art can readily understand that the scope of protection of the invention is apparently not limited to these particular implementations. Those skilled in the art can make equivalent changes or substitutions to the related technical features without departing from the principles of the invention, and all the technical solutions with such changes or substitutions shall fall within the scope of protection of the invention.

## Claims

1. A method for obtaining a confidence of a perception object, comprising:
estimating, based on a perception fusion result of autonomous driving, a confidence of a perception object in the perception fusion result by applying a preset trained confidence estimation model,
wherein the confidence estimation model is obtained by training based on a training dataset, the training dataset comprises backflow data fragments of autonomous driving, and the backflow data fragments comprise backflow perception objects in backflow perception fusion results that trigger autonomous driving function responses, and comprise labeled true positive labels or false positive labels.

2. The method for obtaining a confidence of a perception object according to claim 1, further comprising obtaining the training dataset according to the following steps:
labeling the backflow data fragments with a true positive label or a false positive label for each of the backflow data fragments, and obtaining a triggering time period for triggering the autonomous driving function response and a triggering object ID for the backflow perception object;
obtaining a feature sequence of the backflow perception object based on the triggering time period and the triggering object ID;
generating training data corresponding to the current backflow data fragment according to the feature sequence and the labeled true positive label or false positive label; and
generating the training dataset based on a plurality of pieces of the training data.

3. The method for obtaining a confidence of a perception object according to claim 2, wherein
the obtaining a feature sequence of the backflow perception object comprises:
obtaining, according to the triggering object ID, the feature sequence within the triggering time period from a pb file of the backflow perception object.

4. The method for obtaining a confidence of a perception object according to claim 2 or 3, wherein
the feature sequence comprises at least one of a motion consistency feature, a keyframe observation consistency feature, a keyframe correlation quality feature, an observation continuity feature, a fusion optimization feature, and an object attribute feature of the backflow perception object.

5. The method for obtaining a confidence of a perception object according to any one of claims 1 to 3, further comprising evaluating, according to the following steps, the confidence estimation models that have completed the training, to obtain a trained confidence estimation model:
evaluating the confidence estimation models that have completed the training, to obtain evaluation results;
obtaining candidate models based on the evaluation results; and
obtaining the trained confidence estimation model based on the candidate models.

6. The method for obtaining a confidence of a perception object according to claim 5, wherein the evaluation result comprises a true positive recall rate and a false positive recall rate of the confidence estimation model; and
the obtaining candidate models based on the evaluation results comprises:
selecting a confidence estimation model with the true positive recall rate greater than a first preset value and the false positive recall rate greater than a second preset value as the candidate model.

7. The method for obtaining a confidence of a perception object according to claim 6, wherein
the selecting a confidence estimation model with the true positive recall rate greater than a first preset value and the false positive recall rate greater than a second preset value as the candidate model comprises:
when there are a plurality of confidence estimation models with the false positive recall rate greater than the second preset value, selecting the confidence estimation model with the highest false positive recall rate as the candidate model.

8. The method for obtaining a confidence of a perception object according to claim 5, wherein
the obtaining the trained confidence estimation model based on the candidate models comprises:
performing simulation validation on the candidate models based on a preset rule, and selecting the candidate model that passes the validation as the trained confidence estimation model.

9. The method for obtaining a confidence of a perception object according to any one of claims 1 to 3 or any one of claims 6 to 8, wherein the confidence estimation model is a random forest model; and
the estimating, based on a perception fusion result of autonomous driving, a confidence of a perception object in the perception fusion result by applying a preset trained confidence estimation model comprises:
obtaining a feature sequence of the perception object based on the perception fusion result; and
estimating the confidence of the perception object according to the feature sequence by applying the trained random forest model.

10. The method for obtaining a confidence of a perception object according to claim 9, wherein
the estimating the confidence of the perception object according to the feature sequence by applying the trained random forest model comprises:
obtaining, based on the random forest model, a confidence result of each tree in the random forest model according to the feature sequence; and
estimating the confidence of the perception object according to the confidence results of all trees in the random forest model.

11. A method for autonomous driving planning and control, comprising:
estimating a confidence of a perception object for autonomous driving based on the method for obtaining a confidence of a perception object according to any one of claims 1 to 10; and
performing autonomous driving planning and control based on the perception object and the confidence.

12. The method for autonomous driving planning and control according to claim 11, wherein
the performing autonomous driving planning and control based on the perception object and the confidence comprises:
when the confidence is greater than or equal to a preset first confidence threshold, directly making an autonomous driving function response to the perception object;
when the confidence is less than the first confidence threshold and greater than or equal to a preset second confidence threshold, making the autonomous driving function response to the perception object after delaying for a first preset time; and
when the confidence is less than the second confidence threshold, making no autonomous driving function response to the perception object.

13. A computer-readable storage medium storing a plurality of program codes, wherein the program codes are adapted to be loaded and executed by at least one processor to implement the method for obtaining a confidence of a perception object according to any one of claims 1 to 10 or the method for autonomous driving planning and control according to any one of claims 11 and 12.

14. A smart device, comprising:
at least one processor;
and a memory in communication connection with the at least one processor,
wherein the memory stores a computer program, and the computer program, when executed by the at least one processor, implements the method for obtaining a confidence of a perception object according to any one of claims 1 to 10 or the method for autonomous driving planning and control according to any one of claims 11 and 12.
